Europäisches Patentamt

European Patent Office

Office européen des brevets

(11) Veröffentlichungsnummer: **0 285 843 B1**

# (12) EUROPÄISCHE PATENTSCHRIFT

(45) Veröffentlichungstag der Patentschrift: **09.09.92**

(51) Int. Cl.5: **H04L 12/00**

(21) Anmeldenummer: **88103812.9**

(22) Anmeldetag: **10.03.88**

(54) **Schaltungsanordnung zum Verbinden von Teilnehmereinrichtungen.**

(30) Priorität: **10.04.87 DE 3712129**

(43) Veröffentlichungstag der Anmeldung:
**12.10.88 Patentblatt 88/41**

(45) Bekanntmachung des Hinweises auf die
Patenterteilung:
**09.09.92 Patentblatt 92/37**

(84) Benannte Vertragsstaaten:
**AT DE FR IT**

(56) Entgegenhaltungen:
**DE-A- 2 534 110**

**HASLER MITTEILLUNGEN, Band 36, Nr. 4,
1977, Seiten 112-119, Bern, CH; M.B. DUNN:
"Das neue Vermittlungspult der Telexzentrale Hasler T202"**

**ERICSSON REVIEW, Band 60, Nr. 2, 1983,
Seiten 66-72, Stockholm, SE; L.-E. MORELL:
"Operator position subsystem in AXE 10"**

(73) Patentinhaber: **SIEMENS AKTIENGESELL-
SCHAFT
Wittelsbacherplatz 2
W-8000 München 2(DE)**

(72) Erfinder: **Schumacher, Hinrich
Heinleinstrasse 21
W-8000 München 71(DE)**

## Beschreibung

Die Erfindung betrifft eine Schaltungsanordnung zum Verbinden von Datensignale aufnehmenden und/oder abgebenden Teilnehmereinrichtungen eines Datenvermittlungsnetzes über mit einer Datenvermittlungsanlage verbundene Übertragungsleitungen, welcher neben einer Selbstwähleinrichtung zusätzlich mindestens eine für das Herstellen von handzuvermittelnden Verbindungen dienende Handvermittlungseinrichtung und eine dieser zugeordnete Auftragsspeicheranordnung zugehörig ist, in welche Aufträge für das Herstellen von handvermittelten Verbindungen mit Wahlinformationen, durch die die an der jeweiligen Verbindung beteiligte rufende bzw. gerufene Teilnehmereinrichtung bezeichnet ist, vor einer Bearbeitung durch die Handvermittlungseinrichtung(en) einschreibbar und für eine Bearbeitung in der Reihenfolge des Einschreibens wieder auslesbar sind.

Gegenwärtig existierende Datennetze weisen überwiegend Selbstwählvermittlungsanlagen auf, über die Verbindungen zwischen Teilnehmereinrichtungen automatisch unter Benutzung vorgegebener Vermittlungsprozeduren hergestellt werden. International existieren jedoch nach wie vor Datennetze mit für nicht standardisierte Vermittlungsprozeduren ausgelegten Vermittlungseinrichtungen. Um nun auch Übergänge zu derartigen mit nicht standardisierten Vermittlungsprozeduren arbeitenden Datennetzen zu ermöglichen, werden zuweilen seitens der Betreiber von mit standardisierten Vermittlungsprozeduren arbeitenden Datennetzen neben Selbstwählvermittlungsanlagen auch Handvermittlungseinrichtungen bereitgestellt.

Im Zusammenhang mit dem Betrieb von Handvermittlungsplätzen ist bereits ein Verfahren für die Anrufverteilung von auf frei werdende Handvermittlungsplätze wartenden Anrufen bekannt (DE-PS 25 34 110). Bei diesem bekannten Verfahren werden die wartenden Anrufe vor einer Bearbeitung in einen Auftragsspeicher eingegeben. Den einzelnen Anrufen können dabei unterschiedliche Prioritäten zugeordnet werden. Bei Freiwerden von Vermittlungsplätzen werden Anrufe in der Reihenfolge ihres Einschreibens unter Berücksichtigung der festgelegten Prioritäten für eine Bearbeitung durch die freien Handvermittlungsplätze ausgelesen.

Es ist nun Aufgabe der vorliegenden Erfindung, einen Weg zu zeigen, wie bei einer Schaltungsanordnung der eingangs genannten Art die in der Anrufspeicheranordnung gespeicherten Aufträge unter Berücksichtigung verschiedener Auswahlkriterien abrufbar sind.

Gelöst wird die vorstehend aufgezeigte Aufgabe bei einer Schaltungsanordnung der eingangs genannten Art erfindungsgemäß dadurch, daß in die Auftragsspeicheranordnung für jeden der Aufträge zusätzlich eine von der Datenvermittlungsanlage fortlaufend vergebene Auftragsnummer und ggf. Angaben bezüglich des Bearbeitungszeitpunktes des jeweiligen Auftrags eingeschrieben sind und daß die Auftragsspeicheranordnung von der jeweiligen Handvermittlungseinrichtung her durch von dieser abgegebene Steuersignale derart steuerbar ist, daß die Aufträge für eine Bearbeitung wahlfrei lediglich in der Reihenfolge ihres Einschreibens oder in der Reihenfolge ihres Einschreibens nach Maßgabe von Richtungsinformationen, die jeweils aus einem Teil der die jeweilige gerufene Teilnehmereinrichtung bezeichnenden Wahlinformationen gebildet sind, bzw. nach Maßgabe der für die Aufträge festgelegten Bearbeitungszeitpunkte auslesbar sind.

Die Erfindung bringt den Vorteil mit sich, daß von der jeweiligen Handvermittlungseinrichtung her der Abrufmodus für die Aufträge festlegbar ist. So ist es möglich, als Abrufkriterium die genannten Richtungsinformationen zu benutzen, um beispielsweise in eine bestimmte Richtung verlaufende Verbindungen vorrangig zu vermitteln oder um bei Vorhandensein einer Mehrzahl von Handvermittlungseinrichtungen in jeder der Handvermittlungseinrichtungen lediglich Aufträge für in eine bestimmte Richtung verlaufende Verbindungen zu bearbeiten. Als Richtungsinformationen können dabei beispielsweise die bei internationalem Datenverkehr den Wahlinformationen beigefügten Länderkennzahlen dienen.

Darüber hinaus ist es auch möglich, für die in der Auftragsspeicheranordnung gespeicherten Aufträge Bearbeitungszeitpunkte beispielsweise durch Voranmeldungen seitens der eine Verbindung wünschenden Teilnehmereinrichtungen festzulegen und entsprechende Angaben in die Anrufspeicheranordnung einzutragen. Unter Verwendung dieser Angaben als Abrufkriterium könnten dann beispielsweise zu einem bestimmten Zeitpunkt lediglich diejenigen Aufträge in der Reihenfolge ihres Einschreibens in die Auftragsspeicheranordnung für eine Bearbeitung ausgelesen werden, deren Bearbeitung für diesen Zeitpunkt festgelegt worden ist.

Vorteilhafte Ausgestaltungen der Erfindung ergeben sich aus den unteransprüchen. Der Vorteil dieser Ausgestaltungen besteht darin, daß Handvermittlungseinrichtungen mit einem geringen schaltungstechnischen Aufwand an Selbstwähleinrichtungen anschließbar sind, so daß beispielsweise bei bestehenden Selbstwähleinrichtungen Handvermittlungseintichtungen mit einem geringen Änderungsaufwand nachrüstbar sind.

Im folgenden wird die Erfindung anhand einer Zeichnung beispielsweise näher beschrieben.

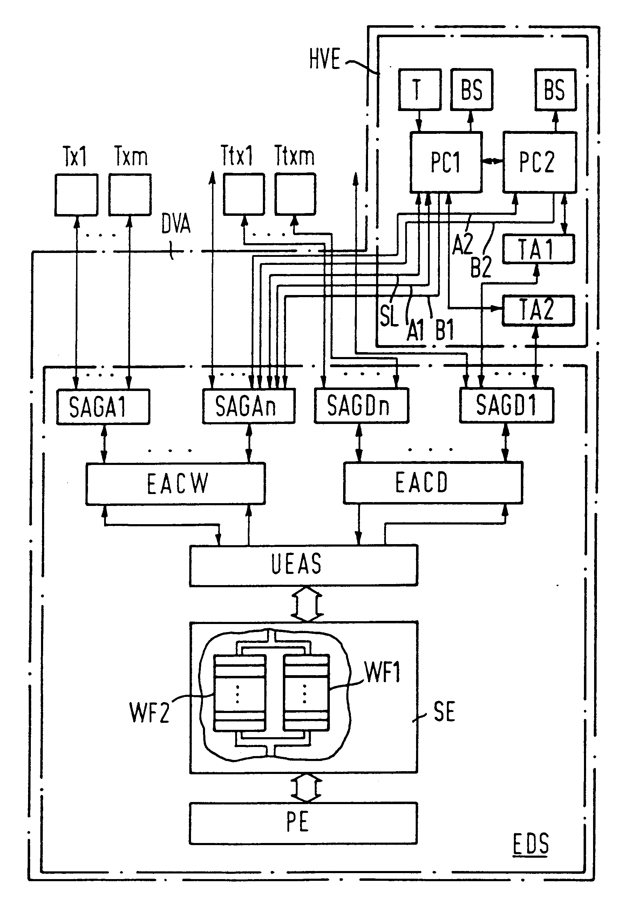

In der Zeichnung ist eine Datenvermittlungsanlage DVA dargestellt. Dieser Datenvermittlungsanlage ist einer für einen Selbstwählbetrieb ausgelegte Fernschreib- und Datenvermittlungsanlage EDS zugehörig, welche allgemein für die Vermittlung von Datensignalen dient. Unter diese Datensignale fallen dabei beispielsweise auch Fernschreibzeichen oder Sprachsignale in digital codierter Form. Von der Fernschreib- und Datenvermittlungsanlage sind zwei verschiedene Gruppen von Anschlußschaltungen dargestellt. Zu einer ersten Gruppe gehören dabei die Anschlußschaltungen SAGAl bis SAGAn, von denen in der Zeichnung lediglich die Anschlußschaltungen SAGAl und SAGAn angedeutet sind. Diese Anschlußschaltungen dienen dazu, digitale Datensignale polariätswechselweise zu verarbeiten. Auf den mit ihnen verbundenen Übertragungsleitungen ist beispielsweise eine Signalübertragung unter Ausnutzung des internationalen Telegrafenalphabets Nr. 2 mit einer für Telexübertragungen üblichen Datenübertragungsrate von 50 Bd möglich. Damit sind beispielsweise an diese Anschlußschaltungen übliche Fernschreib- bzw. Telex-Teilnehmerendgeräte anschließbar. In der Zeichnung sind mit der Asnchlußschaltung SAGAl mit Txl bis Txm bezeichnete Telex-Teilnehmerendgeräte verbunden.

Die zweite Gruppe von Anschlußschaltungen umfaßt die Anschlußschaltungen SAGDl bis SAGDn. Von diesen sind in der Zeichnung lediglich die Anschlußschaltungen SAGDl und SAGDn dargestellt. Diese Anschlußschaltungen verarbeiten digitale Datensignale in Form von Bitgruppen, die auch als Envelopes bezeichnet werden. Beispielsweise können sie digitale Datensignale entsprechend dem internationalen Alphabet IA Nr. 5 mit einer Datenübertragungsrate von beispielsweise 2400 bit/s abgeben und aufnehmen. Es handelt sich dabei um eine synchrone Datenübertragung.

An die gerade genannten Anschlußleitungen sind beispielsweise sogenannte Bürofernschreibmaschinen anschließbar, die auch als Teletex-Teilnehmerendgeräte bezeichnet werden. In der Zeichnung sind an die Anschlußschaltung SAGDn mit Ttxl bis Ttxm bezeichnete Teletex-Teilnehmerendgeräteangeschlossen.

Bezüglich der zuvor genannten Anschlußschaltungen sei darauf hingewiesen, daß diese jeweils mit einer Vielzahl von Übertragungsleitungen verbunden sind, die als Teilnehmerleitungen für den Anschluß von beispielsweise Telex-Teilnehmerendgeräten bzw. Teletex-Teilnehmerendgeräte oder als Amtsverbindungsleitungen benutzbar sind, über welche beispielsweise jeweils zwei Fernschreib- und Datenvermittlungsanlagen miteinander in Verbindung stehen.

Neben den zuvor genannten Anschlußschaltungen sind als Schaltungsteile der Fernschreib- und Datenvermittlungsanlage EDS noch Eingabe-/Ausgabe-Codewandler EACD und EACW, eine Übertragungsablaufsteuerung UEAS, eine Speichereinheit SE und schließlich eine Programmsteuereinheit PE angegeben. Auf das Zusammenwirken dieser Schaltungsteile wird hier nicht näher eingegangen, da dieses bereits hinlänglich bekannt ist (siehe beispielsweise "Siemens-Zeitschrift", Heft 2, 1977, Seiten 82 bis 87).

Von der genannten Speichereinheit SE ist lediglich eine aus zwei Auftragsspeichern WF1 und WF2 mit jeweils einer Vielzahl von Speicherplätzen gebildete Auftragsspeicheranordnung dargestellt, auf die im folgenden noch näher eingegangen wird.

An die genannte Anschlußschaltung SAGAn ist eine Handvermittlungseinrichtung HVE über fünf Übertragungsleitungen angeschlossen. Diese Übertragungsleitungen sind jeweils als Standleitung benutzt. Eine erste mit SL bezeichnete Übertragungsleitung ist für einen bidirektionalen Betrieb ausgelegt und dient u. a. für die Übertragung von Steuersignalen. Die übrigen Übertragungsleitungen, die mit A1, A2, B1 und B2 bezeichnet sind, dienen für die Übertragung von Datensignalen. Mit den Übertragungsleitungen SL, A1 und B1 ist eine Mikroprozessoranordnung PC1, die beispielsweise durch einen Personalcomputer gebildet sein möge, verbunden. Diese Mikroprozessoranordnung weist eine Bedieneinrichtung beispielsweise in Form einer Tastatur T und eines Bildschirmes BS auf. Mit dieser Mikroprozessoranordnung ist über eine Verbindungsleitung eine zweite, ebenfalls zu der Handvermittlungseinrichtung gehörende Mikroprozessoranordnung PC2 verbunden. Diese Mikroprozessoranordnung, bei der es sich ebenfalls um einen Personalcomputer handeln möge, weist als Anzeigeelement ebenfalls einen Bildschirm BS auf und ist über die zuvor genannten Übertragungsleitungen A2 und B2 angeschlossen.

Die Mikroprozessoranordnungen PC1 und PC2 stehen zusätzlich über jeweils eine Verbindungsleitung mit einer Teletex-Anpassungsschaltung TA1 bzw. TA2 in Verbindung. Jede dieser Teletex-Anpassungsschaltungen ist an eine Übertragungsleitung der bereits genannten Anschlußschaltung SAGDl angeschlossen.

Im übrigen sei noch darauf hingewiesen, daß mit der Fernschreib-und Datenvermittlungsanlage EDS auch weitere Handvermittlungseinrichtungen in der angegebenen Weise angeschlossen sein können.

Nachdem zuvor der Aufbau der in der Zeichnungen dargestellten Datenvermittlungsanlage erläutert worden ist, wird nunmehr die Wirkungsweise dieser Datenvermittlungsanlage näher beschrieben.

Für die Handvermittlungseinrichtung HVE sind zwei Betriebsarten vorgesehen. Bei einer ersten erfolgt eine Vermittlung von Verbindungen zwischen Teilnehmereinrichtungen, die bei einer bestehenden Verbindung Datensignale mit der gleichen Übertragungsprozedur aufnehmen bzw. abgeben. Derartige Teilnehmereinrichtungen mögen beispielsweise Telex-Teilnehmerendgeräte sein. Bei der zweiten Betriebsart werden Verbindungen zwischen Teilnehmereinrichtungen vermittelt, die Datensignale mit unterschiedlichen Übertragungsprozeduren aufnehmen bzw. abgeben. Diese Teilnehmereinrichtungen mögen beispielsweise Teletex-Teilnehmerendgeräte und Telex-Teilnehmerendgeräte sein. Im folgenden wird nun zunächst auf die erste Betriebsart eingegangen.

Von der Datenvermittlungsanlage DVA können sowohl Verbindungen im Selbstwählverkehr als auch im Handvermittlungsbetrieb vermittelt werden. Im Selbstwählverkehr gibt für den Aufbau einer Verbindung der jeweilige Telex-Teilnehmer in bekannter Weise Wahlinformationen ab, die den zu rufenden Teilnehmer, hier einen Telex-Teilnehmer, bezeichnen. Bei internationalem Verkehr ist in diesen Wahlinformationen auch ein das jeweils zu erreichende Land bezeichnendes Länderkennzeichen enthalten. Anhand der von dem jeweiligen Telex-Teilnehmer abgegebenen Wahlinformationen wird dann von der als Selbstwähleinrichtung ausgebildeten Fernschreib- und Datenvermittlungsanlage EDS automatisch eine Verbindung hergestellt.

Telex-Teilnehmer, die dagegen eine handvermittelte Verbindung wünschen (rufende Telex-Teilnehmer), geben z. B. bei einer internationalen Verbindung über ihr Telex-Teilnehmerendgerät neben einem Landeskennzeichen für das zu erreichende Land und der Rufnummer für das zu rufende Telex-Teilnehmerendgerät ein gesondertes Wahleinleitungszeichen, beispielsweise "00", an die Fernschreib- und Datenvermittlungsanlage EDS ab. Bei Auftreten eines derartigen Wahleinleitungszeichens generiert diese unter der Steuerung der Programmsteuereinheit PE einen Auftrag für die Handvermittlungseinrichtung HVE unter Angabe der Wahlinformationen für das jeweilige rufende und jeweilige gerufene Telex-Teilnehmerendgerät und trägt diesen Auftrag anschließend in den bereits genannten Auftragsspeicher WF1 der Speichereinheit SE ein. Dabei wird dem Auftrag eine fortlaufend von der Programmsteuereinheit PE vergebene Auftragsnummer beigefügt. Das jeweils rufende Telex-Teilnehmerendgerät erhält als Zeichen, daß es mit dem Auftragspuffer WF1 verbunden ist, periodisch ein Wartesignal, beispielsweise in Form einer Telexzeichenfolge "MOM", zugeführt.

Der Auftragsspeicher WF1 ist als Schreib-/Lesespeicher mit einer Vielzahl von Speicherplätzen für die Speicherung von Aufträgen ausgebildet. Die Speicherplätze sind dabei derart anhand der den Aufträgen beigefügten Auftragsnummern miteinander verkettet, daß die Aufträge später in der Reihenfolge ihres Einschreibens wieder auslesbar sind. Um eine Überfüllung dieses Auftragsspeichers durch Aufträge zu vermeiden, die in eine bestimmte Richtung (in bestimmte Länder) verlaufende Verbindungen betreffen, ist die Anzahl der pro Richtung aufnehmbaren Aufträge durch die Programmsteuereinheit PE begrenzt.

Die in den Auftragsspeicher WF1 eingeschriebenen Aufträge sind von der Handvermittlungseinrichtung HVE durch Abgabe von Steuersignalen abrufbar. Diese Abgabe erfolgt mit Hilfe der mit der Mikroprozessoranordnung PC1 verbundenen Tastatur T. Aufgrund dieser Steuersignale, die über die Steuerleitung SL zu der Fernschreib- und Datenvermittlungsanlage EDS hin übertragen werden, können die gespeicherten Aufträge wahlweise entweder richtungsunabhängig oder richtungsabhängig in der Reihenfolge ihres Einschreibens ausgelesen werden. Durch ein solches richtungsabhängiges Auslesen von Aufträgen ist es beispielsweise möglich, bei Vorhandensein mehrerer Handvermittlungseinrichtungen von jeder dieser lediglich in bestimmte Richtungen verlaufende Verbindungen zu vermitteln.

Auf die Abgabe eines Steuersignals hin wird der jeweils als nächster zu bearbeitende Auftrag zu der Handvermittlungseinrichtung hin übertragen. Für diese Übertragung können beispielsweise gemeinsam die Datenleitungen A1, B1 sowie die Steuerleitung SL benutzt werden. Die in einem solchen übertragenen Auftrag enthaltenen Wahlinformationen werden von der Mikroprozessoranordnung PC1 aufgenommen und über den Bildschirm BS dem Bediener der Handvermittlungseinrichtung angezeigt. Der Bediener versucht wiederum unter Abgabe eines entsprechenden Steuersignals anhand der vorliegenden Wahlinformationen eine Verbindung zu dem gewünschten Telex-Teilnehmerendgerät (gerufenes Endgerät) aufzubauen. Für diesen Verbindungsaufbau werden die Wahlinformationen für das zu rufende Telex-Teilnehmerendgerät der Fernschreib- und Datenvermittlungsanlage EDS zugeführt, die unter teilweiser Benutzung von auch für den Selbstwählverkehr verwendeten Vermittlungsprozeduren versucht, das gewünschte Telex-Teilnehmerendgerät zu erreichen. Informationen über einen erfolgreichen Versuch werden der Mikroprozessoranordnung PC1 mitgeteilt und auf dem Bildschirm BS angezeigt. Ist das gewünschte Telex-Teilnehmerendgerät erreichbar, wird dann von der Handvermittlungseinrichtung HVE die Durchschaltung der beiden an der Verbindung beteiligten Telex-Teilnehmerendgeräte eingeleitet. Anderenfalls wird ein erneuter Versuch für einen Verbindungsaufbau unternommen.

Vor der eigentlichen Durchschaltung werden zunächst die für eine Gebührenerfassung erforderlichen Daten ermittelt, wie z. B. Angaben bezüglich der zu berüchsichtigenden Gebührenzonen. Sind diese Daten festgelegt, so erfolgt die Durchschaltung des rufenden und des gerufenen Telex-Teilnehmerendgerätes unter der Steuerung der Fernschreib- und Datenvermittlungsanlage EDS mit Hilfe von Durchschalteprozeduren, die von dieser auch teilweise im Selbstwählverkehr benutzt sind.

Im Zuge dieser Durchschaltung werden die Kennungen zwischen den beiden Endgeräten ausgetauscht. Die nunmehr aufgebaute Verbindung verläuft dabei zunächst über die beiden Datenleitungen A1 und B1 der Handvermittlungseinrichtung, in dem die beiden Datenleitungen in der Mikroprozessoranordnung PC1 durch einen steuerbaren Schalter miteinander verbunden werden. Nachdem sichergestellt ist, beispielsweise durch Mitlesen, daß das rufende Telex-Teilnehmerendgerät seine Nachrichten ordnungsgemäß übermitteln kann, wird die Verbindung von der Handvermittlungseinrichtung HVE durch Abgabe eines entsprechenden Steuersignals an die Fernschreib- und Datenvermittlungsanlage EDS übergeben. Die Handvermittlungseinrichtung steht dann wieder für die Bearbeitung eines weiteren Auftrages zur Verfügung. Das Auslösen einer Verbindung erfolgt ausschließlich durch die Fernschreib-und Datenvermittlungsanlage.

Wie bereits oben erwähnt, weist die Handvermittlungseinrichtung HVE eine weitere, mit den Datenleitungen A2 und B2 verbundene Mikroprozessoranordnung PC2 auf. Mit dieser weiteren Mikroprozessoranordnung kann unter Verwendung der Tastatur T der Mikroprozessoranordnung PC1 parallel ein weiterer Auftrag in der zuvor beschriebenen Weise bearbeitet werden.

Mit Hilfe der Handvermittlungseinrichtung HVE können auch Aufträge für vorangemeldete Verbindungen vermittelt werden. Derartige Aufträge werden von der Fernschreib- und Datenvermittlungsanlage EDS derart gebildet, daß sie jeweils neben den bereits genannten Wahlinformationen und einer Auftragsnummer Angaben bezüglich der aktuellen Uhrzeit aufweisen. Diese Aufträge werden in den bereits genannten Auftragsspeicher WF2, der in der gleichen Weise wie der Auftragsspeicher WF1 aufgebaut ist, eingetragen. Dieser Auftragsspeicher kann alternativ zu dem Auftragsspeicher WF1 von der Handvermittlungsanlage HVE durch Abgabe von Steuersignalen angesteuert werden.

Aufgrund der in den zuvorgenannten Aufträgen enthaltenen Uhrzeitangaben werden diese bei einer Ansteuerung des Auftragsspeichers WF2 sofort für eine Bearbeitung ausgelesen. In einem Dialog mit dem jeweiligen Telex-Teilnehmer werden von diesen Angaben bezüglich des gewünschten Bearbeitungszeitraumes übertragen. Anhand dieser Angaben ersetzt der Bediener der Handvermittlungseinrichtung die in dem jeweiligen Auftrag enthaltenen Uhrzeitangaben durch Zeitangaben, die den frühesten gewünschten Bearbeitungszeitpunkt angeben, und schreibt den jeweils geänderten Auftrag zurück in den Auftragsspeicher WF2. Bei nachfolgenden Ansteuerungen werden die in dem Auftragsspeicher WF2 eingetragenen, für einen bestimmten Zeitpunkt vorangemeldeten Aufträge in der Reihenfolge ihres Einschreibens ausgelesen. Dabei wird für jeden Auftrag versucht, das jeweilige gerufene Telex-Teilnehmerendgerät zu erreichen. Falls dies erfolgreich ist, wird das jeweilige rufende Telex-Teilnehmerendgerät im Rückruf angerufen und die Verbindung zu dem jeweiligen gerufenen Telex-Teilnehmerendgerät in der zuvor beschriebenen Weise durchgeschaltet. Falls das jeweilige gerufene Telex-Teilnehmerendgerät nicht erreichbar ist, wird der momentan nicht bearbeitbare Auftrag mit korrigierten Angaben bezüglich des Bearbeitungszeitpunktes versehen und erneut in den Auftragsspeicher WF2 eingetragen.

Vorstehend wurde davon ausgegangen, daß sämtliche Angaben für den Aufbau handzuvermittelnder Verbindungen bereits von den eine solche Verbindung wünschenden Telex-Teilnehmern geliefert werden. Sollten jedoch die gelieferten Angaben für den Aufbau von handzuvermittelnden Verbindungen nicht ausreichend kann, so kann von der Handvermittlungseinrichtung HVE aus durch Abgabe von Steuersignalen auf eine in der Zeichnung nicht näher dargestellte sogenannte Zielnetzdatei der Fernschreib- und Datenvermittlungsanlage EDS zugegriffen werden. In dieser Zielnetzdatei sind beispielsweise sämtliche Verbindungsmöglichkeiten (Transitwege) nach Länderkennzeichen sortiert. Anhand dieser Angaben kann der Bediener der Handvermittlungseinrichtung im Bedarfsfalle die ihm bereits vorliegenden Wahlinformationen ergänzen und die gewünschten Verbindungen anschließend in der bereits dargestellten Weise herstellen.

Ergänzend zu der gerade beschriebenen ersten Betriebsart der Handvermittlungseinrichtung HVE sei noch darauf hingewiesen, daß anstelle der beiden getrennten Auftragsspeicher WF1 und WF2 auch ein einziger Auftragsspeicher benutzt werden kann, welcher sämtliche Angaben enthält, die sowohl eine richtungsabhängige als auch bearbeitungszeitabhängige Bearbeitung von Aufträgen ermöglichen.

Im folgenden wird nun noch auf die zweite Betriebsart der HandvermittlungseinrichtungHVE eingegangen. In dieser Betriebsart ist ein Übergangsverkehr von Teletex-Teilnehmerendgeräten zu nur über handvermittelte Verbindungen erreichbaren Telex-Teilnehmerendgeräten möglich. Wünscht ein Teletex-Teilnehmer einen solchen Übergangsverkehr, so teilt er dies der Fernschreib- und Datenvermittlungsanlage EDS durch den Wahlinformationen beigefügte Wahleinleitungszeichen mit. Bei Auftreten derartiger Wahleinleitungszeichen übernimmt die Fernschreib- und Datenvermittlungsanlage die auf die Wahlinformationen folgenden, von dem Teletex-Teilnehmerendgerät abgegebenen Datensignale und überträgt diese Datensignale zusammen mit den zuvor empfangenen Wahlinformationen an eine der Teletex-Anpassungsschaltungen TA1 und TA2 entsprechend den Teletex-Konventionen. Diese Teletex-Anpassungsschaltungen weisen jeweils einen weiteren Auftragsspeicher auf, in welchen Datensignale und zugehörige Wahlinformationen umfassende Aufträge vor einer Bearbeitung durch die Handvermittlungseinrichtung zunächst zwischengespeichert werden. Den Aufträgen können dabei jeweils wieder Informationen in Form einer Auftragsnummer, die beispielsweise von der der jeweiligen Teletex-Anpassungsschaltung zugehörigen Mikroprozessoranordnung auf eine Anforderung hin vergeben wird, und ggf. von Angaben bezüglich eines Bearbeitungszeitpunktes beigefügt sein, so daß die Aufträge auch richtungsabhängig bzw. bearbeitungszeitabhängig in der Reihenfolge ihres Einschreibens für eine Bearbeitung auslesbar sind.

Liegt in einer der Teletex-Anpassungsschaltungen, die beispielsweise die Teletex-Anpassungsschaltung TA1 sein möge, ein Auftrag für die Handvermittlungseinrichtung vor, so gibt diese ein Auftragsmeldesignal an die Mikroprozessoranordnung PC1 ab. Auf ein solches Auftragsmeldesignal hin fordert der Bediener dann die in den als nächsten zu bearbeitenden Auftrag enthaltenen Wahlinformationen an und versucht anhand dieser durch ein über die Tastatur T eingegebenes Steuersignal eine Verbindung in der zuvor beschriebenen Weise zu dem gewünschten Telex-Teilnehmerendgerät aufzubauen. Ist ein solcher Versuch erfolgreich, so ruft der Bediener nach Abfrage des in dem Telex-Teilnehmerendgerät vorhandenen Kennungsgebers durch ein an die Teletex-Anpassungsschaltung TA1 abgegebenes Steuersignal die für die gerade aufgebaute Verbindung gespeicherten Datensignale ab und veranlaßt deren Übertragung zu dem Telex-Teilnehmerendgerät hin. Bei einer solchen Übertragung, die über die Mikroprozessoranordnung PC1 und die Datenleitung B1 erfolgt, nimmt die Mikroprozessoranordnung PC1 im übrigen noch eine Codeumsetzung vom Teletex- in das Telexformat vor.Hat der Bediener der Handvermittlungseinrichtung HVE festgestellt daß die Datensignale ordnungsgemäß das Telex-Teilnehmerendgerät erreicht haben, bereitet er eine Quittung für das Teletex-Teilnehmerendgerät vor, von dem zuvor die gerade übertragenen Datensignale aufgenommen worden sind. Die Rufnummer für dieses Teletex Teilnehmerendgerät entnimmt er dabei dem noch in der Teletex-Anpassungsschaltung TA1 gespeicherten Auftrag. Die Quittung enthält auch die Kennung des die Datensignale empfangenen Telex-Teilnehmerendgerätes. Diese so vorbereitete Quittung wird anschließend in Form eines Quittungsrufes über die Teletex-Anpassungsschaltung TA1 und die Fernschreib- und Datenvermittlungsanlage EDS übertragen. Ist auch dieser Quittungsruf erfolgreich abgeschlossen, wird der in der Teletex-Anpassungsschaltung TA1 noch gespeicherte Auftrag gelöscht.

Auch bei der gerade beschriebenen zweiten Betriebsart der HandvermittlungseinrichtungHVE kann die zweite Mikroprozessoranordnung PC2 in Verbindung mit der Teletex-Anpassungsschaltung TA2 dazu benutzt werden, gleichzeitig einen weiteren Auftrag im Übergangsverkehr zwischen einem Teletex-Teilnehmerendgerät und einem Telex-Teilnehmer-endgerät zu bearbeiten. Darüber hinaus ist es auch je nach dem im Übergangsverkehr auftretenden Verkehrsaufkommen möglich, die Telex-Anpassungsschaltungen jeweils derart auszulegen, daß diese auf einer Mehrzahl von mit der Fernschreib- und Datenvermittlungsanlage EDS verbundenen Übertragungsleitungen auftretende Aufträge übernehmen können. Ebenso ist es möglich, die Teletex-Anpassungsschaltungen mit mehreren, zu unterschiedlichen Handvermittlungseinrichtungen gehörenden Mikroprozessoranordnungen zu verbinden.

Die zuvor beschriebenen zwei Betriebsarten können von dem Bediener der Handvermittlungseinrichtung HVE wahlfrei ausgewählt werden, so daß es beispielsweise auch möglich ist, gleichzeitig Aufträge mit und ohne Übergangsverkehr zu bearbeiten.

Vorstehend wurden als Beispiele lediglich die Fälle betrachtet, daß in der ersten Betriebsart der Handvermittlungseinrichtung Verbindungen zwischen zwei Telex-Teilnehmereinrichtungen und in der zweiten Betriebsart Verbindungen zwischen Teletex-Teilnehmereinrichtungen und Telex-Teilnehmereinrichtungen aufgebaut werden. Mit Hilfe der Vermittlungseinrichtung sind jedoch auch allgemein in der ersten Betriebsart mit gleichen Datenübertragungsprozeduren arbeitende Teilnehmereinrichtungen bzw. in der zweiten Betriebsart mit unterschiedlichen Datenübertragungsprozeduren arbeitende Teilnehmereinrichtungen miteinander verbindbar. Als Beispiel für die zweite Betriebsart seien hier noch Verbindungen zwischen Teletex-Teilnehmereinrichtungen und Fernkopiereinrichtungen (FAX) bzw. zwischen Fernkopiereinrichtungen und Telex-Teilnehmereinrichtungen genannt.

Abschließend sei noch darauf hingewiesen, daß abweichend von dem zuvor beschriebenen Ausführungsbeispiel unter Handvermittlungseinrichtungen auch solche Einrichtungen verstanden werden sollen, die anstelle der manuell bedienbaren Mikroprozessoranordnungen Anordnungen aufweisen, welche entsprechend ihrer Kapazität die Bearbeitung von Aufträgen automatisch in der angegebenen Weise abwickeln.

**Patentansprüche**

1.   Schaltungsanordnung zum Verbinden von Datensignale aufnehmenden und/oder abgebenden Teilnehmereinchtungen (Txl,....,Txm) eines Datenvermittlungsnetzes über mit einer Datenvermittlungsanlage (DVA) verbundene Übertragungsleitungen, welcher neben einer Selbstwähleinrichtung (EDS) zusätzlich mindestens eine für das Herstellen von handzuvermittelnden Verbindungen dienenden Handvermittlungseinrichtung (HVE) und eine dieser zugeordnete Auftragsspeicheranordnung (WF1, WF2) zugehörig ist, in welche Aufträge für das Herstellen von handvermittelten Verbindungen mit Wahlinformationen, durch die die an der jeweiligen Verbindung beteiligte rufende bzw. gerufene Teilnehmereinrichtung bezeichnet ist, vor einer Bearbeitung durch die Handvermittlungseinrichtungen (HVE) einschreibbar und für eine Bearbeitung in der Reihenfolge des Einschreibens wieder auslesbar sind, **dadurch gekennzeichnet,**
daß in die Auftragsspeicheranordnung (WF1, WF2) für jeden der Aufträge zusätzlich eine von der Datenvermittlungsanlage (DVA) fortlaufend vergebene Auftragsnummer und ggf. Angaben bezüglich des Bearbeitungszeitpunktes des jeweiligen Auftrags eingeschrieben sind und daß die Auftragsspeicheranordnung (WF1, WF2) von der jeweiligen Handvermittlungseinrichtung (HVE) her durch von dieser abgegebene Steuersignale derart steuerbar ist, daß die aufträge für eine Bearbeitung wahlfrei lediglich in der Reihenfolge ihres Einschreibens oder in der Reihenfolge ihres Einschreibens nach Maßgabe von Richtungsinformationen, die jeweils aus einem Teil der die jeweilige gerufene Teilnehmereinrichtung bezeichnenden Wahlinformationen gebildet sind, bzw. nach Maßgabe der für die Aufträge festgelegten Bearbeitungszeitpunkte auslesbar sind.

2.   Schaltungsanordnung nach Anspruch 1, **dadurch gekennzeichnet,** daß die Auftraggsspeicheranordnung (WF1, WF2) wenigstens einen ersten Auftragsspeicher (WF1), in welche lediglich mit Wahlinformationen und einer Auftragsnummer versehene Aufträge einschreibbar sind, und wenigstens einen zweiten Auftragsspeicher (WF2) aufweist, in welche zusätzlich mit Angaben bezüglich des Bearbeitungszeitpunktes versehene Aufträge einschreibbar sind,
und daß der erste bzw. zweite Auftragsspeicher von der jeweiligen Handvermittlungseinrichtung (HVE) her durch Abgabe von Steuersignalen derart ansteuerbar ist, daß aus diesem Aufträge wahlfrei lediglich in der Reihenfolge ihres Einschreibens oder in der Reihenfolge ihres Einschreibens nach Maßgabe der genannten Richtungsinformationen bzw. in der Reihenfolge ihres Einschreibens nach Maßgabe der für die Aufträge festgelegten Bearbeitungszeitpunkte auslesbar sind.

3.   Schaltungsanordnung nach Anspruch 1 oder 2, **dadurch gekennzeichnet,** daß die Auftragsspeicheranordnung (WF1, WF2) in der Selbstwähleinrichtung (EDS) angeordnet ist, welche nach Maßgabe der für den Aufbau von Verbindungen von rufenden Teilnehmereinrichtungen abgegebenen Wahlinformationen eine Direktverbindung zu der jeweils gerufenen Teilnehmereinrichtung herstellt oder einen Auftrag für die Handvermittlungseinrichtung(en) in die Auftragsspeicheranordnung (WF1, WF2) einschreibt,
daß die jeweilige Handvermittlungseinrichtung an wenigstens drei als Standleitungen benutzte Übertragungsleitungen der Selbstwähleinrichtung (EDS) angeschlossen ist, daß über eine erste dieser Übertragungsleitungen zumindest die genannten Steuersignale über tragbar sind und daß über die verbleibenden Übertragungsleitungen einerseits zumindest ein Teil der in den von den jeweiligen Handvermittlungseinrichtung zu bearbeitenden Aufträge enthaltenen Angaben übertragbar sind und andererseits nach Maßgabe der in den Aufträgen jeweils enthaltenen Wahlinformationen von der jeweiligen Handvermittlungseinrichtung her Verbindungen über die Selbstwähleinrichtung (EDS) zwischen den jeweils in Frage kommenden Teilnehmereinrichtungen herstellbar sind.

**Claims**

1.   Circuit arrangement for connecting subscriber devices (Tx1,..., Txm), which receive and/or emit data signals, of a data switching network over transmission lines connected to a data switching system (DVA) which, as well as an automatic dialling device (EDS), additionally includes at least one manual switching device (HVE) serving to establish connections which are to be switched manually and a job memory arrangement (WF1, WF2) associated therewith, in which arrangement jobs for establishing manually switched connections with selection information, by means of which the calling and, respectively, called subscriber device involved in the respective connection is designated, can be written in before processing by the manual switching devices (HVE) and can be read out again for processing in the sequence of the writing-in, characterised in that in addition a job number which is continuously allocated by the data switching system (DVA) and, if appropriate, information relating to the processing time of the respective job are written into the job memory arrangement (WF1, WF2) for each of the jobs, and in that the job memory arrangement (WF1, WF2) can be controlled by the respective manual switching device (HVE) by control signals emitted by the latter in such a way that the jobs for processing can be read out randomly only in the sequence of their writing-in or in the sequence of their writing-in in accordance with direction information which is formed respectively from a part of the selection information designating the respective called subscriber device, or in accordance with the processing times stipulated for the jobs.

2. Circuit arrangement according to Claim 1, characterised in that the job memory arrangement (WF1, WF2) has at least a first job memory (WF1) into which only jobs provided with selection information and a job number can be written and at least a second job memory (WF2) into which jobs which are additionally provided with data relating to the processing time can be written, and in that the first and second job memory, respectively, can be driven by the respective manual switching device (HVE) by the emission of control signals in such a way that jobs can be read out of said memory randomly only in the sequence of their writing-in or in the sequence of their writing-in in accordance with the aforesaid direction information or in the sequence of their writing-in in accordance with the processing times stipulated for the jobs.

3. Circuit arrangement according to Claim 1 or 2, characterised in that the job memory arrangement (WF1, WF2) is arranged in the automatic dialling device (EDS) which, in accordance with the selection information emitted for the setup of connections from calling subscriber devices, establishes a direct connection to the respectively called subscriber device or writes a job for the manual switching device(s) into the job memory arrangement (WF1, WF2), in that the respective manual switching device is connected to at least three transmission lines of the automatic dialling device (EDS) used as dedicated transmission lines, in that at least the said control signals can be transmitted via a first of these transmission lines, and in that, on the one hand, at least a part of the data contained in the jobs to be processed by the respective manual switching device can be transmitted via the remaining transmission lines and, on the other hand, connections can be established from the respective manual switching device between the respective subscriber devices via the automatic dialling device (EDS) in accordance with the selection information contained in each case in the jobs.

**Revendications**

1. Montage pour raccorder les postes d'abonnés (Tx1,...,Txm), qui reçoivent et/ou émettent des signaux de données, d'un réseau de commutation de données, par l'intermédiaire de lignes de transmission qui sont raccordées à une installation de commutation de données (DV), et auquel sont associés, en dehors d'un dispositif de sélection automatique (DS), en outre au moins un dispositif de commutation manuelle (HVE) servant à l'établissement de liaisons réalisées par commutation manuelle, et un dispositif de mémoire d'ordres (WF1, WF2) associé à ce dispositif et dans lequel des ordres pour l'établissement de liaisons à commutation manuelle peuvent être enregistrés à l'aide d'informations de sélection, à l'aide desquelles est désigné le poste d'abonné appelant ou appelé, qui participe à la liaison respective, avant un traitement par les dispositifs de commutation manuelle (HVE) et peuvent être à nouveau lus pour un traitement, conformément à la séquence d'enregistrement, caractérisé par le fait que dans le dispositif de mémoire d'ordres (WF1, WF2), un numéro d'ordre, délivré en permanence par l'installation de commutation de données, et éventuellement des indications concernant l'instant de traitement de l'ordre respectif sont enregistrés en supplément pour chacun des ordres, et que le dispositif de mémoire d'ordres (WF1,WF2) peut être commandé à partir du dispositif respectif de commutation manuelle (HVA), par des signaux de commande délivrés par ce dispositif de sorte que les ordres pour un traitement peuvent être lus au choix simplement selon la séquence de l'enregistrement ou selon la séquence de leur enregistrement en fonction d'informations de directions qui sont formées respectivement par une partie des informations de sélection désignant le poste d'abonné respectif appelé, ou en fonction des instants de traitement fixés pour les ordres.

2. Montage suivant la revendication 1, caractérisé par le fait que le dispositif de mémoire d'ordres (WF1,WF2) comporte au moins une première mémoire d'ordres (WF1), dans laquelle seuls peuvent être enregistrés des ordres pourvus d'informations de sélection et d'un numéro d'ordre, et au moins une seconde mémoire d'ordres (WF2), dans laquelle peuvent être enregistrés, en outre, des ordres pourvus d'indications concernant l'instant de traitement, et

que la première ou la seconde mémoire d'ordres peut être commandée à partir du dispositif respectif de commutation manuelle (HVE), au moyen de la délivrance de signaux de commande de telle sorte qu'à partir de cette mémoire, des ordres peuvent être lus au choix uniquement dans la séquence de leur enregistrement ou dans la séquence de leur enregistrement en fonction desdites informations de direction ou dans la séquence d'enregistrement en fonction des instants de traitement fixés pour les ordres.

3. Montage suivant la revendication 1 ou 2, caractérisé par le fait que le dispositif de mémoire d'ordres (WF1,WF2) est disposé dans le dispositif de sélection automatique (EDS), qui, en fonction des informations de sélection délivrées pour l'établissement de liaisons par des postes d'abonnés appelants, établit une liaison directe avec le poste d'abonné respectif appelé ou enregistre un ordre pour le ou les dispositifs de traitement manuel, dans le dispositif de mémoire d'ordres (WF1,WF2),

que le dispositif de commutation manuelle respectif est raccordé à au moins trois lignes de transmission, utilisées comme lignes spécialisées, du dispositif de sélection automatique (EDS), qu'au moins lesdits signaux de commande peuvent être transmis par l'intermédiaire d'une première de ces lignes de transmission et que, d'une part, au moins une partie des indications contenues dans les ordres devant être traités par le dispositif respectif de commutation manuel peut être transmise par l'intermédiaire des autres lignes de transmission et que, d'autre part, des liaisons peuvent être établies par l'intermédiaire du dispositif de sélection automatique (EDS) entre les postes d'abonnés entrant respectivement en jeu, en fonction des informations de sélection, respectivement contenues dans les ordres, à partir du dispositif respectif de commutation manuelle.